# EUROPEAN PATENT APPLICATION

(11) **EP 4 465 504 A1**
(43) Date of publication of application: **20.11.2024**
(21) Application number: 24168528.8
(22) Date of filing: 04.04.2024
(51) Int. Cl.: H02K 15/02, H01F 27/245, H02K 15/03, B32B 15/01, C21D 8/12, C22C 38/02, H01F 41/02, H02K 1/02

(54) **METHODS FOR MANUFACTURING SOFT MAGNETIC THIN LAMINATES**

(30) Priority: 12.05.2023 US 202318316622
(71) Applicant: General Electric Company, Schenectady, NY 12345 (US)
(72) Inventor: HUANG, Shenyan, Niskayuna, 12309 (US); TRIMMER, Andrew Lee, Niskayuna, 12309 (US); RALLABANDI, Vandana Prabhakar, Niskayuna, 12309 (US); DIAL, Laura Cerully, Arden, 28704 (US)
(74) Representative: Openshaw & Co.

(57) **Abstract**

A method (600) of manufacturing soft magnetic thin laminates (260) includes producing a bulk component (200) comprising a soft magnetic material, the bulk component (200) extending an axial direction (A); and slicing the bulk component (200) in a radial direction (R), perpendicular to the axial direction (A), to produce a plurality of soft magnetic thin laminates (260).

## Description

### FIELD

This disclosure relates generally to methods of manufacturing soft magnetic thin laminates using single-material or multi-material compositions.

### BACKGROUND

The need for high power density and high efficiency electrical machines (i.e., electric motors and generators) has long been prevalent for a variety of applications, particularly for energy production applications. The current trend is to increase rotational speeds to increase the machine's power density, and hence reduce its mass and cost.

For instance, the power output of an electric machine may be increased by increasing the machine size, improving thermal management, increasing rotor speed, or by increasing the magnetic utilization. However, material selection and design criteria must be balanced between electromagnetic and mechanical performance.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a side cross-sectional view of a portion of an electric machine in accordance with an exemplary aspect of the present disclosure.
FIG. 2 is a perspective view of a bulk component in accordance with an exemplary aspect of the present disclosure.
FIG. 3 is a perspective view of the bulk component of FIG. 2 being sliced in accordance with an exemplary aspect of the present disclosure.
FIG. 4 is a perspective view of a soft magnetic thin film laminate sliced from the bulk component of FIG. 3 in accordance with an exemplary aspect of the present disclosure.
FIG. 5 is a perspective view of a plurality of thin film laminates as a portion of an electric machine in accordance with an exemplary aspect of the present disclosure.
FIG. 6 provides a flowchart diagram showing an exemplary method of manufacturing soft magnetic thin laminates in accordance with an exemplary aspect of the present disclosure.
FIG. 7 provides a flowchart diagram showing an exemplary method of manufacturing an electric machine in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of' in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

As used herein, the terms "axial" and "axially" refer to directions and orientations that extend substantially parallel to a centerline of the gas turbine engine. Moreover, the terms "radial" and "radially" refer to directions and orientations that extend substantially perpendicular to the centerline of the gas turbine engine. In addition, as used herein, the terms "circumferential" and "circumferentially" refer to directions and orientations that extend arcuately about the centerline of the gas turbine engine.

The term "electric machine" may generally include a stator and a rotor, the rotor rotatable relative to the stator. Additionally, the electric machine may be configured in any suitable manner for converting mechanical power, such as from a turbine machine like a gas turbine engine, to electrical power, or electrical power to mechanical power. For example, the electric machine may be configured as an asynchronous or induction electric machine operable to generate or utilize alternating current (AC) electric power. Alternatively, the electric machine may be configured as a synchronous electric machine operable to generate or utilize AC electric power or direct current (DC) electric power. In such a manner it will be appreciated that the stator, the rotor, or both may generally include one or more of a plurality of coils or winding arranged in any suitable number of phases, one or more permanent magnets, one or more electromagnets, etc.

Chemical elements are discussed in the present disclosure using their common chemical abbreviation, such as commonly found on a periodic table of elements. For example, hydrogen is represented by its common chemical abbreviation H; helium is represented by its common chemical abbreviation He; and so forth.

The terms "coupled," "fixed," "attached to," and the like refer to both direct coupling, fixing, or attaching, as well as indirect coupling, fixing, or attaching through one or more intermediate components or features, unless otherwise specified herein.

As used herein, the terms "first", "second", and "third" may be used interchangeably to distinguish one component from another and are not intended to signify location or importance of the individual components.

The term "adjacent" as used herein with reference to two walls and/or surfaces refers to the two walls and/or surfaces contacting one another, or the two walls and/or surfaces being separated only by one or more nonstructural layers and the two walls and/or surfaces and the one or more nonstructural layers being in a serial contact relationship (i.e., a first wall/surface contacting the one or more nonstructural layers, and the one or more nonstructural layers contacting the a second wall/surface).

As described herein, the presently disclosed subject matter can involve the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as laser powder bed fusion (LPBF) technology which is sometimes also referred to as direct metal laser melting (DMLM), a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Directed Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, Binder Jet, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 µm and 200 µm, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

The present disclosure is generally related to soft magnetic thin laminates such as for use in electric machines. Soft magnetic materials can be used for manufacturing a plurality of laminates that can be stacked or otherwise combined together to form one or more components of the electric machine, such as a rotor or stator. For instance, soft magnetic materials may be hot or cold rolled with annealing treatment to form the necessary laminates having a suitable maximum thickness. Moreover, power output for electric machines may be increased by increasing the machine size, improving thermal management, increasing rotor speed, or by increasing the magnetic utilization.

However, in electric machine topologies, there can be a trade-off between electromagnetic and mechanical performance. For example, in interior permanent magnet (IPM) machines, the trade-off can manifest in the form of the sizing of the rotor bridges and center posts that hold the lamination together. Electromagnetically, the bridges and center posts can retain the magnetic flux in the rotor, rather than the desired movement to the air gap to couple with stator where it is needed. However, reducing the size of the bridges and posts is influenced by the structural requirements to support the internal stress of operating at the desired speed and torque, such as requiring larger bridges and center posts for mechanical integrity at high rotating speed.

The magnetic utilization may additionally, or alternatively, be increased by using a low permeability material for the bridges and center posts. For instance, one approach can be to create a monolithic laminate having different magnetic states at desired locations, such as using a gas nitriding method and local heating method for local phase transformation and magnetic state change. However, this approach can have a specific alloy composition window and limitations on the magnetic and mechanical properties. Alternatively, the use of multiple materials may be considered. However, soft magnetic sheet manufacturing may rely on step-by-step rolling to gradually reduce the sheet thickness, where the introduction of multiple materials would greatly inhibit, or outright prevent, the required dimensional control of bridge and center-posts.

Thus, the disclosure herein provides a new manufacturing approach to fabricate thin magnetic laminates with multi-material compositions, or with a single material having poor workability, for electric machines. Instead of hot or cold rolling the laminates, a bulk near-net-shape component can be produced comprising various or multiple materials with tailored magnetic or mechanical properties. The component can be a single material component such as by way of non-limiting example, a high silicon steel. The component can alternatively be a multiple material component to provide tailored magnetic and mechanical properties. One non-limiting example being a soft magnetic material and a non-magnetic material. Moreover, depending on the material make up, the component can be manufactured via a variety of investment casting techniques, additive manufacturing techniques, or a hybrid combination of investment casting and additive manufacturing techniques. The component can then be sliced into thin laminates, such as by electrochemical machining in a non-limiting example. The resulting laminates will inherently have the requisite geometry due to the near-net-shape original component, and can be subsequently assembled into at least a portion of the electric machine.

In addition, the methods disclosed herein can eliminate the use of conventional rolling processes for production of laminate sheets including magnetic sheets and offers an alternate laminate manufacturing route for difficult to roll materials, such as high silicon steels. High silicon steel (for example with equal or greater than 3% Si) has the advantage of high resistivity, lower hysteresis loss and higher mechanical strength than low silicon electrical steel. However, it is brittle due to the presence of intermetallic phases and thus has poor formability via thin sheet rolling. Present commercial production of high silicon steel (Fe-6.5Si) requires the use of a chemical vapor process to diffuse Si by reaction with a conventionally rolled Fe-3Si substrate.

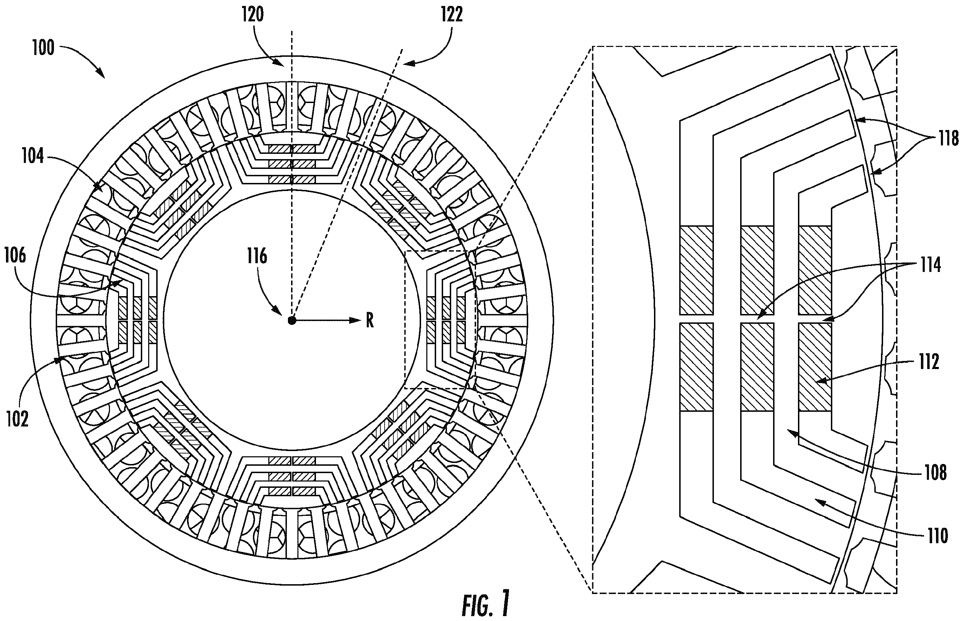

Referring now to the drawings, wherein identical numerals indicate the same elements throughout the figures, FIG. 1 illustrates one example of a portion of an electric machine 100. The electric machine 100 can be a synchronous reluctance and interior permanent magnet machine. The electric machine 100 includes a stator 102 having distributed or concentrated conductive windings 104 through which electric current is conducted to cause the electric machine 100 to operate. The electric machine 100 also includes a rotor 106 formed from a laminated stack of conductive sheets, insulated from each other and clamped together. In some embodiments, the electric machine 100 can operate as a motor that operates to propel a vehicle. For example, the rotor 106 can be rotated by the electric current in the conductive windings 104 of the stator 102, which rotates a shaft joined to the rotor 106. This shaft can be coupled with turbine blades, axles, wheels, or the like, to help propel a vehicle such as an airplane, land-based vehicle (e.g., automobile, rail vehicle, mining vehicle, etc.), or marine vessel.

The rotor 106 can be formed from a ferromagnetic material that allows magnetic flux to flow through the rotor 106. The rotor 106 can include one or more features that define flux carrier portions 108 of the rotor 106 and flux barriers 110 of the rotor 106. The flux barriers 110 can be gaps or removed portions in the rotor 106, such as air gaps in the rotor 106. Permanent magnets 112 can be placed inside these flux barriers 110. Alternatively, no permanent magnets 112 (not illustrated) are in the flux barriers 110. The flux carrier portions 108 represent segments of the rotor 106 that remain after the flux barriers 110 are cut from, removed, or otherwise formed in the rotor 106.

Neighboring flux carrier portions 108 may be connected by elongated center posts 114 along the radial direction R (e.g., directions that radially extend from a center axis or axis of rotation 116 of the rotor 106). The ends of the flux carrier portions 108 may be connected by bridges 118 along circumferential directions (e.g., directions that circumferentially surround the axis of rotation 116 of the rotor 106). In some embodiments, the flux carrier portions 108, the bridges 118, or a combination thereof can be formed when the flux barriers 110 are cut from the sheets forming the rotor 106.

In operation, a varying electric current is conducted through the conductive windings 104 to cause the rotor 106 to rotate relative to the stator 102. This current creates magnetic flux in the rotor 106. The flux carrier portions 108 guide and carry magnetic flux in the rotor 106 while the flux barrier portions 110 block or impede flow of the magnetic flux in the rotor 106. These flux carrier portions 108 create a larger reluctance path in the rotor 106 along a first axis 120 (e.g., the quadrature or 'q' axis of the rotor 106) and a smaller reluctance path in the rotor 106 along a different, second axis 122 (e.g., the direct or 'd' axis of the rotor 106). The difference in reluctance along the first axis 120 and the second axis 122 leads to an overall reluctance torque. The difference in reluctance can be created by the shape and size of the flux carrier portions 108 and the flux barrier portions 110.

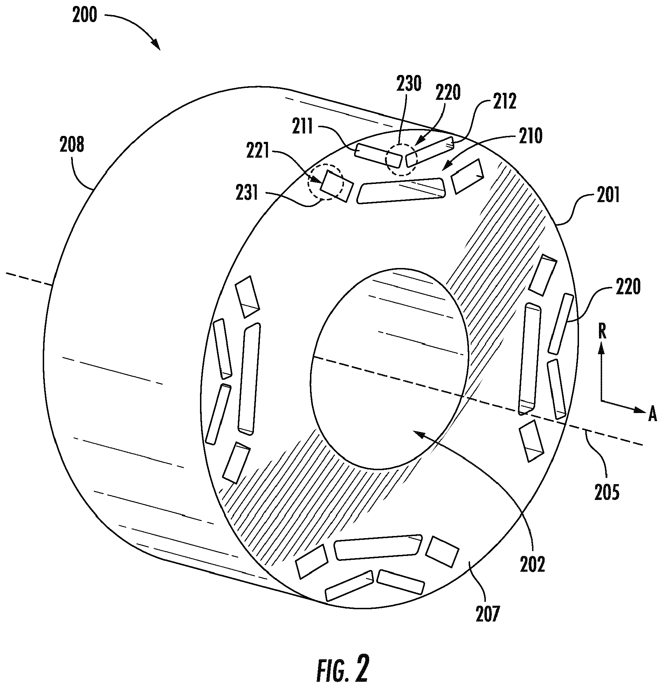

With reference to FIG. 2, a bulk component 200 is illustrated for utilization in manufacturing soft magnetic thin laminates. The bulk component 200 can be a near-net-shape component. As used herein, near-net-shape refers to a component that is substantially the same shape as, such as having the same, or being within 5% of, dimensions in any given direction of the end use component to be utilized in an electric machine. By way of non-limiting example, as illustrated in FIG. 2, the bulk component 200 can be shaped as a rotor for the electric machine. That is, the bulk component 200 may comprise a toroidal body 201 surrounding a hollow core 202. The hollow core 202 can extend in an axial direction A, and the toroidal body 201 can extend away from the hollow core 202 in a radial direction R that is perpendicular to the axial direction A. In the illustrated example the toroidal body 201 is a square toroid though it need not be.

The bulk component 200 can further include a plurality of flux barrier gaps 210. The flux barrier gaps 210 can be distributed around a central axis 205 that extends in the axial direction A. Each of the flux barrier gaps 210 can extend through the bulk component 200 in the axial direction form a first end 207 to a second end 208, opposite the first end. As illustrated in the rotor 106 presented in FIG. 1 and discussed above, the one or more of the flux barrier gaps 210 can be configured to eventually receive one or more permanent magnets (112 in FIG. 1).

The bulk component 200, including the flux barrier gaps 210, can be presented in a variety of different topologies. For instance, as illustrated in FIG. 2, four groups of flux barrier gaps 210 may be symmetrically distributed around the central axis 205 of the bulk component. Within one or more of these flux barrier gaps 210, two adjacent flux barrier gaps 210 may be disposed in a V-shaped orientation. That is, a first flux barrier gap 211 and a second flux barrier gap 212 may be slanted down and towards one another to form the V-shaped orientation.

The absence of material at the flux barrier gaps 210 may result in one or more high stress locations 230, 231 in the bulk component 200. For instance, where two adjacent flux barrier gaps 210 are arranged in a V-shaped orientation to define a center post 220, the material of the bulk component 200 between the two flux barrier gaps 210 can define a first high stress location 230 due to the increased mechanical stress placed at the isolated material forming the center post 220. Similarly, a second high stress location 231 may exist directly adjacent the flux barrier gaps 210, such as at the bridges 221, or outer corners or edges, of the flux barrier gaps 210 furthest from the central axis 205. As disclosed herein, the material or materials of these high stress locations 230, 231 may be tailored to provide low permeability and low magnetic saturation, in addition to high mechanical strength.

The bulk component 200 comprises a soft magnetic material suitable for thin laminates in an electric machine. As used herein, soft magnetic material refers to an alloy that can be magnetized and demagnetized and has an intrinsic coercivity of less than 1,000 Am⁻¹. In some embodiments, the bulk component 200 comprises a single material (e.g., single alloy) such that it is a single-material bulk component. For example, the bulk component 200 can comprise a steel, such as a high silicon steel. In some embodiments, the bulk component 200 may comprise steel comprising from 4.0 to 7.0 weight percent silicon, from 5.0 to 7.0 weight percent silicon, or from 6.0 to 7.0 weight percent silicon. In some embodiments, the bulk component 200 may comprise Fe-6.5Si. In some embodiments, the bulk component 200 can comprise an iron cobalt alloy.

In some embodiments, the bulk component 200 comprises a plurality of different materials (e.g., different alloys) such that it is a multi-material bulk component. For instance, the bulk component 200 can comprise both a soft magnetic material and a non-magnetic alloy. The soft magnetic material can comprise an alloy that can be magnetized and demagnetized and has an intrinsic coercivity of less than 1,000 Am⁻¹, such as an iron cobalt alloy, an iron silicon alloy, or a combination thereof. The non-magnetic alloy can be a high strength alloy. For instance, the non-magnetic alloy can have a yield strength of greater than 70 ksi at room temperature. In some embodiments, the non-magnetic alloy can comprise a nickel-based alloy (e.g., a nickel chromium alloy) or an iron-based alloy.

The different materials may be utilized at different locations of the bulk component 200. For instance, the material having the higher tensile strength and low magnetic permeability may be used at one or more of the high stress locations 230, 231 of the bulk component 200 (e.g., at the center posts 220 or the bridges 221 that are between or adjacent the flux barrier gaps 210), while the majority or remainder of the bulk component 200 could comprise the soft magnetic material.

The bulk component 200 can be produced using a variety of potential techniques. Including based on the material composition of the bulk component. In some embodiments, the bulk component 200 may be produced via investment casting. For instance, a single-material bulk component may be produced via investment casting. In some embodiments, the single-material bulk component may be produced by investment casting with directional solidification in the axial direction. In some embodiments, the bulk component 200 may be produced by additive manufacturing.

For multi-material bulk components 200, various manufacturing techniques may be utilized such as additive manufacturing, investment casting, or a hybrid combination of additive manufacturing and investment casting. For instance, in some embodiments, a multi-material bulk component 200 may be produced via LPBF, DED, or binder jet additive manufacturing techniques.

In some embodiments, the bulk component 200 may be heat treated. For instance, the bulk component 200 may be heat treated at one or more temperatures prior to subsequent processing steps, such as heat treating the bulk component 200 prior to slicing it into a plurality of soft magnetic thin laminates. Heat treating the bulk component 200 can refine the mechanical or magnetic properties of the bulk component 200, such as by relieving residual stress in the bulk component 200 (e.g., from additive manufacturing), or otherwise altering the strength, hardness, or other mechanical or magnetic properties of the bulk component 200. Moreover, in some embodiments, the bulk component 200 may be produced into the near-net-shape of the ultimate component (e.g., a portion of an electrical machine) from casting, additive manufacturing, or other manufacturing techniques. However, in some embodiments, the bulk component 200 may be further machined into the near-net-shape of the desired component, such as when the original production of the bulk component is different than the final desired shape. Machining can include, for example, electrical discharge machining, mechanical grinding, or lathe machining.

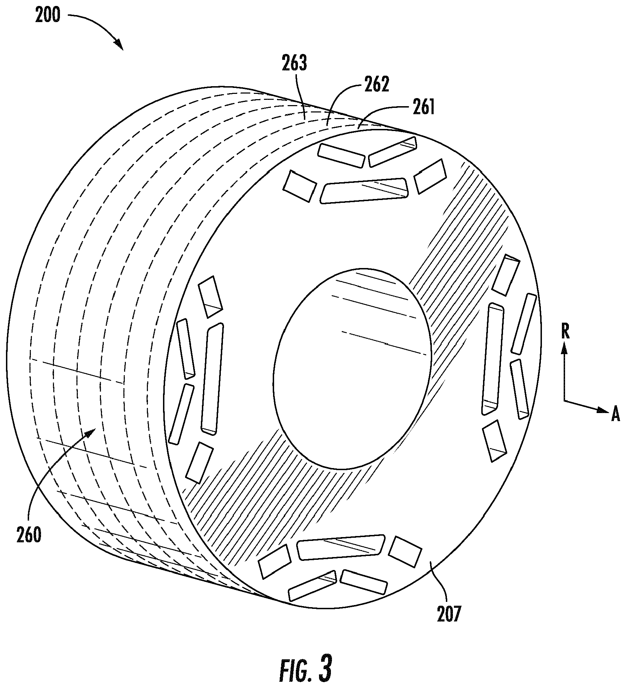

With reference to FIG. 3, the bulk component 200 of FIG. 2 is illustrated for slicing to produce a plurality of soft magnetic thin laminates 260. That is, after the bulk component 200 is produced, it can be sliced into a plurality of soft magnetic thin laminates 260. Due to the near-net-shape of the bulk component 200, the resulting soft magnetic thin laminates 260 will inherently have the requisite geometry for utilization in the electric machine.

As illustrated in FIG. 3, slicing of the bulk component 200 can occur along the radial direction R, perpendicular to the axial direction. For instance, a first soft magnetic thin laminate 261 may be sliced from a first end 207 of the bulk component 200, followed by a second soft magnetic thin laminate 262, a third soft magnetic thin laminate 263, and so forth. As a result, the bulk component 200 can be readily sliced into a plurality of soft magnetic thin laminates 260 having tailored mechanical properties utilizing concerted material selection.

The thickness of the plurality of soft magnetic thin laminates 260 in the axial direction can be tailored as needed for eventual assembly of the portion of the electric machine. An appropriate laminate thickness may be determined by electric machine performance requirements and balanced by eddy current loss and stacking factor. For instance, the thickness for each of the soft magnetic thin laminates 260 may be less than or equal to 0.75 mm, or less than or equal to 0.5 mm. In some embodiments, the thickness for each of the soft magnetic laminates may range from 0.1 mm to 0.75 mm, or range from 0.15 mm to 0.5 mm. In some embodiments, each of the plurality of soft magnetic thin laminates 260 may have the same thickness. However, in some embodiments, the thickness of the soft magnetic thin laminates 260 may vary from one to another, such that some of the soft magnetic thin laminates 260 may be thicker than others.

In some embodiments, the bulk component 200 may be sliced via electrochemical machining (ECM). Through ECM, a wire may be used to slice through the bulk component 200 at a plurality of locations to produce the plurality of soft magnetic thin laminations 260. Notably, due to the chemical nature of ECM, no heat input will occur during machining the soft magnetic thin laminates 260. As result of the lack of heat input during machining, the microstructure and material characteristics of the bulk component 200 can remain intact even when sliced into the plurality of soft magnetic thin laminations 260. Moreover, some bulk components may contain residual stress and be subject to warping upon the application of heat when slicing. However, through ECM, warping can be avoided due to the lack of any heat application when slicing. In some embodiments, alternative cutting methods may be utilized, such as electrical discharge machining (EDM), which may or may not be combined with additional machining steps to reach the final products.

While FIG. 3 and the related description refers to slicing the slicing the bulk component 200 to produce the plurality of soft magnetic thin laminates 260, alternative or additional methods may also be utilized or avoided. For instance, in some embodiments, the one or more soft magnetic thin laminates may be produced from the bulk component free from rolling. As used herein, free from rolling refers to producing the component without the use of conventional rolling techniques such as hot rolling or cold rolling. For instance, by slicing the bulk component (e.g., a near-net-shape bulk component) via ECM, the resulting plurality of soft magnetic thin laminates will embody the desired shape, thereby avoiding the potential need for rolling techniques.

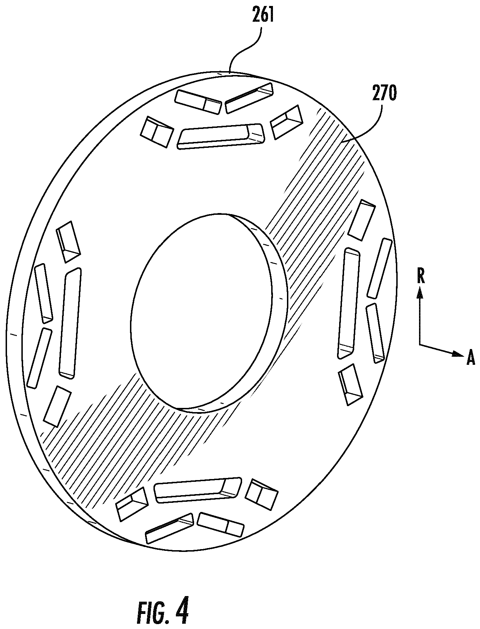

With reference now to FIG. 4, a first soft magnetic thin laminate 261 is illustrated as sliced from the bulk component 200 illustrated in FIGS. 2 and 3. As illustrated, the first soft magnetic thin laminate 261 can possess the desired topography after slicing without the need for additional processing steps thereby simplifying overall manufacturing.

In some embodiments, the first soft magnetic thin laminate 261 may be subjected to one or more treatment steps. For instance, depending on the material, the surface 270 of the first soft magnetic thin laminate 261 may undergo treatment to provide protection, insulation, or other desired characteristics. In some embodiments, the surface 270 of the first soft magnetic thin laminate 261 may be coated in one or more locations with an electrically resistive coating. For instance, high silicon steels, such as, Fe-6.5Si, may be coated with a C5 coating to provide an insulation layer. In some embodiments, the surface 270 of the first soft magnetic thin laminate 261 may be oxidized in one or more locations. Depending on the material or materials of the first soft magnetic thin laminate 261, the oxidization of the surface may naturally produce an electrically resistive layer and thus not require a supplemental insulating coating. For instance, surface oxidization of iron cobalt alloys can provide an electrically resistive layer without the need for a supplemental coating.

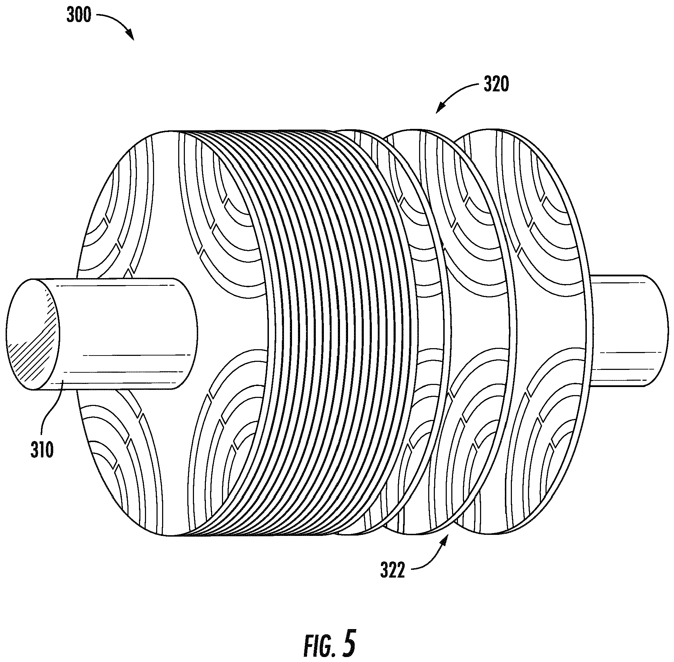

With reference to FIG. 5, a portion of an electric machine 300 is illustrated utilizing a plurality of soft magnetic thin laminates 320. The soft magnetic thin laminates 320 can be produced using the methods and processes disclosed herein and have a variety of potential topographies. Namely, after the plurality of soft magnetic thin laminates 320 are sliced from a bulk component, they can be assembled into a plurality of stacked layers for the electric machine 300. For instance, as illustrated in FIG. 5, the plurality of soft magnetic thin laminates 320 can be concentrically stacked onto a shaft 310. In some embodiments, each of the plurality of soft magnetic thin laminates 320 may be separated by a gap 322. The gaps 322 can be electrically insulative, such as by being filled with an insulative material to separate each of the plurality of soft magnetic thin laminates. In some embodiments, the plurality of soft magnetic thin laminates 320 can be stacked and bonded such as with chemical bonding via epoxy or other bonding materials.

While FIG. 5 illustrates the soft magnetic thin laminates 320 forming a rotor for an electric machine 300, the soft magnetic thin laminates 320 may alternatively form one or more other components of the electric machine 300. For instance, in some embodiments, the soft magnetic thin laminates 320 may be combined to form a stator (not illustrated) for the electric machine 300.

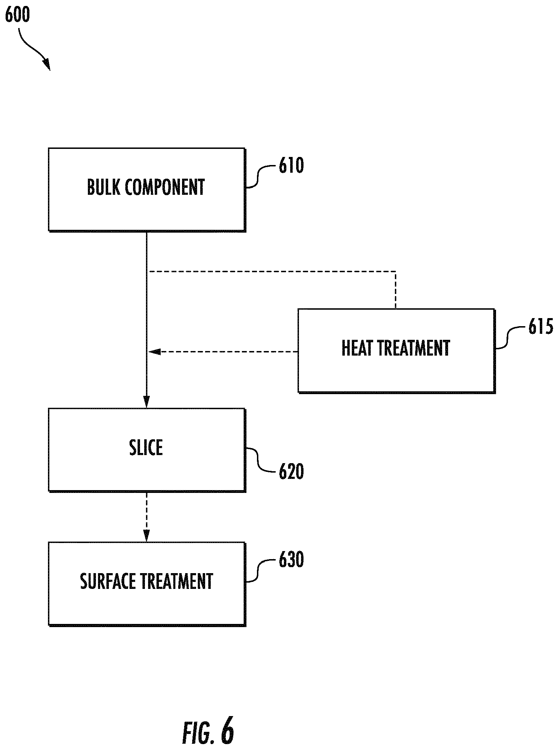

Referring now to FIG. 6, a method 600 is presented for manufacturing soft magnetic thin laminates, such as those discussed herein and illustrated in FIGS. 3-5. The method 600 starts with producing a bulk component in step 610. As discussed herein, the bulk component can comprise a soft magnetic material such as through a single-material bulk component or multi-material bulk component. The bulk component can further comprise, for instance, a near-net-shape rotor or stator for an electric machine.

Producing the bulk component in step 610 can include manufacturing the bulk component through various manufacturing methods. For instance, producing the bulk toroidal component can include casting the bulk component through investment casting. In such embodiments, the bulk component may be directionally solidified along its axial direction. Alternatively, or additionally, the bulk component may be additively manufactured, such as through LPBF, DED, or via binder jet printing. In even some embodiments, a portion of the bulk component may be produced by investment casting in one material, while the remaining portion of the bulk component may be built by additive manufacturing in another material. Alternatively, producing the bulk component in step 610 may simply comprise providing a previously manufactured bulk component for subsequent manufacturing steps within method 600.

Optionally, method 600 may further comprise heat treating the bulk component in step 615. Heat treating in step 615 may include subjecting the bulk component to one or more elevated temperatures prior to subsequent processing steps to refine the mechanical or magnetic properties of the bulk component. For instance, heat treating in step 615 may be used to relieve residual stress in the bulk component (e.g., from additive manufacturing in step 610), or otherwise altering the strength, hardness, or other mechanical or magnetic properties of the bulk component.

With continued reference to FIG. 6, the method 600 further comprises slicing the bulk component in step 620. The bulk component can be sliced a plurality of times in the radial direction (perpendicular to the axial direction) to produce a plurality of soft magnetic thin film laminates. In some embodiments, the bulk component can be sliced via electrochemical machining. In some embodiments, the bulk component can be sliced via electrical discharge machining. The resulting plurality of soft magnetic thin film laminates may then be used for electrical machines, such as in a turbomachine like a gas turbine engine.

Optionally, method 600 may further comprise surface treating the plurality of soft magnetic thin film laminates in step 630. Surface treating may include, for example, heat treating, shaping, machining, or other surface treatments or combinations thereof. For instance, in some embodiments, the plurality of soft magnetic thin film laminates may be at least partially coated in step 630 with an electrically resistant coating.

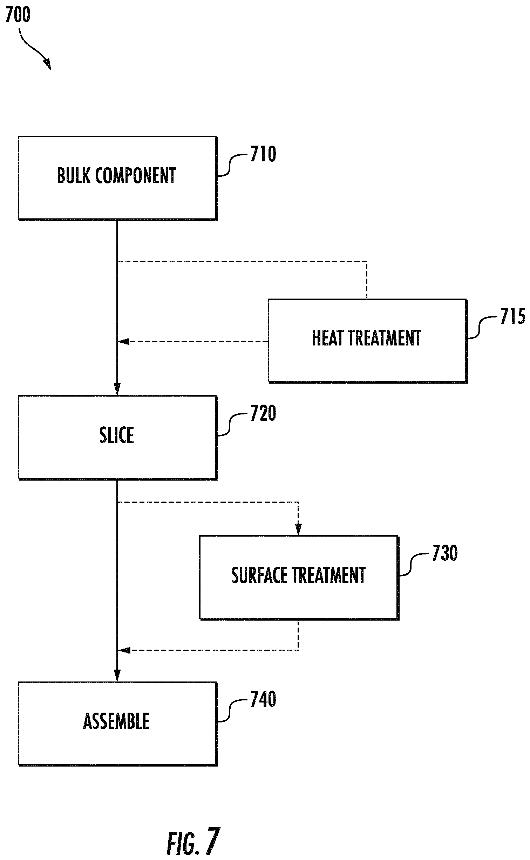

Referring now to FIG. 7, a method 700 is presented for manufacturing at least a portion of an electric machine, such as those discussed herein and illustrated in FIGS. 1 and 5 using the bulk components and soft magnetic thin film laminates illustrated in FIGS. 2-4. The method 700 starts with producing a bulk component in step 710. As discussed herein, the bulk component can comprise a soft magnetic material such as through a single-material bulk component or multi-material bulk component. The bulk component can further comprise, for instance, a near-net-shape rotor or stator for an electric machine. In these and other embodiments, the plurality of soft magnetic thin laminates can be stator laminates or rotor laminates.

Producing the bulk component in step 710 can include manufacturing the bulk component through various manufacturing methods. For instance, producing the bulk toroidal component can include casting the bulk component through investment casting. In such embodiments, the bulk component may be directionally solidified along its axial direction. Alternatively, or additionally, the bulk component may be additively manufactured, such as through LPBF, DED, or via binder jet. Alternatively, producing the bulk component in step 710 may simply comprise providing a previously manufactured bulk component for subsequent manufacturing steps within method 700.

Optionally, method 700 may further comprise heat treating the bulk component in step 715. Heat treating in step 715 may include subjecting the bulk component to one or more elevated temperatures prior to subsequent processing steps to refine the mechanical or magnetic properties of the bulk component. For instance, heat treating in step 715 may be used to relieve residual stress in the bulk component (e.g., from additive manufacturing in step 710), or otherwise altering the strength, hardness, or other mechanical or magnetic properties of the bulk component.

With continued reference to FIG. 7, the method 700 further comprises slicing the bulk component in step 720. The bulk component can be sliced a plurality of times in the radial direction (perpendicular to the axial direction) to produce a plurality of soft magnetic thin film laminates. In some embodiments, the bulk component can be sliced via electrochemical machining. In some embodiments, the bulk component can be sliced via electrical discharge machining.

Optionally, method 700 may further comprise surface treating the plurality of soft magnetic thin film laminates in step 730. Surface treating may include, for example, heat treating, shaping, machining, or other surface treatments or combinations thereof. For instance, in some embodiments, the plurality of soft magnetic thin film laminates may be at least partially coated in step 730 with an electrically resistant coating.

Method 700 can further comprise assembling the plurality of soft magnetic thin film laminates in step 740 to form at least a portion of the electric machine. For instance, the plurality of soft magnetic thin film laminates can be assembled into a plurality of stacked layers, such as being concentrically stacked onto a shaft along the axial direction. In some embodiments, each of the plurality of soft magnetic thin laminates may be separated by a gap. The gaps can be electrically insulative, such as by being filled with an insulative material to separate each of the plurality of soft magnetic thin laminates. In some embodiments, the plurality of soft magnetic thin laminates can be stacked and bonded such as chemical bonding via epoxy or other bonding materials. The stacked soft magnetic thin film laminates can be utilized to form one or more different components of the electric machine, such as the rotor or the stator.

Further aspects are provided by the subject matter of the following clauses:
A method of manufacturing soft magnetic thin laminates, the method comprising producing a bulk component comprising a soft magnetic material, the bulk component extending an axial direction; and slicing the bulk component in a radial direction, perpendicular to the axial direction, to produce a plurality of soft magnetic thin laminates.

The method of any clause herein, wherein slicing is via electrochemical machining.

The method of any clause herein, wherein each of the plurality of soft magnetic thin laminates has a thickness in the axial direction of less than or equal to 0.5 mm.

The method of any clause herein, wherein the bulk component is a single-material bulk component.

The method of any clause herein, wherein the single-material bulk component is produced by investment casing or additive manufacturing.

The method of any clause herein, wherein the single-material bulk component is solidified in the axial direction during investment casting.

The method of any clause herein, wherein the bulk component comprises a steel comprising from 3.0 to 7.0 weight percent silicon.

The method of any clause herein, wherein the bulk component comprises Fe-6.5Si.

The method of any clause herein, wherein the bulk component is a multi-material bulk component.

The method of any clause herein, wherein the multi-material bulk component comprises a soft magnetic material having an intrinsic coercivity of less than 1,000 Am⁻¹.

The method of any clause herein, wherein the soft magnetic material comprises an iron cobalt alloy, an iron silicon alloy, or a combination thereof.

The method of any clause herein, wherein the multi-material bulk component further comprises a non-magnetic alloy having a yield strength greater than or equal to 70 ksi at room temperature.

The method of any clause herein, wherein the non-magnetic alloy comprises a nickel-based alloy or an iron-based alloy.

The method of any clause herein, wherein the multi-material bulk component is produced by additive manufacturing.

The method of any clause herein, wherein producing the bulk component comprises producing a near-net-shaped bulk component.

The method of any clause herein, wherein the near-net-shaped bulk component comprises a plurality of flux barrier gaps symmetrically distributed around a central axis of the bulk component and extending through the bulk component in the axial direction.

The method of any clause herein, wherein the near-net-shaped bulk component comprises a toroidal body surrounding a hollow core that extends in the axial direction, and wherein at least a first flux barrier gap and a second flux barrier gap are arranged in a V-shaped orientation.

The method of any clause herein, wherein the plurality of soft magnetic laminates are a plurality of rotor laminates or stator laminates.

The method of any clause herein, wherein the bulk component is produced via additive manufacturing.

The method of any clause herein, further comprising heat treating the bulk component prior to slicing the bulk component.

The method of any clause herein, wherein the plurality of soft magnetic thin laminates are produced free from rolling.

A method of manufacturing an electric machine, the method comprising producing a bulk component comprising a soft magnetic material, the bulk component extending an axial direction; slicing the bulk component via electrochemical machining in a radial direction, perpendicular to the axial direction, to produce a plurality of soft magnetic thin laminates; and assembling the plurality of soft magnetic thin laminates to form at least a portion of the electric machine.

The method of any clause herein, wherein the bulk component comprises a steel comprising from 4.0 to 7.0 weight percent silicon.

The method of any clause herein, wherein the bulk component is a multi-material bulk component comprising a soft magnetic material having an intrinsic coercivity of less than 1,000 Am⁻¹ and a non-magnetic alloy having a yield strength greater than or equal to 70 ksi at room temperature.

An electric machine comprising a stator comprising a conductive windings; and a rotor comprising a plurality of soft magnetic thin laminates stacked together in an axial direction; wherein each of the plurality of soft magnetic thin laminates has a thickness in the axial direction of less than or equal to 0.75 mm.

The electric machine of any clause herein, wherein each of the soft magnetic thin laminates comprises a single-material soft magnetic thin laminate.

The electric machine of any clause herein, wherein the single-material soft magnetic thin laminate comprises a steel comprising from 6.0 to 7.0 weight percent silicon.

The electric machine of any clause herein, wherein each of soft magnetic thin laminates comprises a multi-material soft magnetic thin laminate.

The electric machine of any clause herein, wherein the multi-material soft magnetic thin laminate comprises a soft magnetic material and a non-magnetic alloy.

A method of manufacturing a plurality of soft magnetic thin laminates, the method comprising producing a bulk component comprising a soft magnetic material, the bulk component extending an axial direction; and produce one or more soft magnetic thin laminates from the bulk component, wherein the one or more soft magnetic thin laminates are produced free from rolling.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A method (600) of manufacturing soft magnetic thin laminates (260), the method (600) comprising:
producing a bulk component (200) comprising a soft magnetic material, the bulk component (200) extending an axial direction (A); and
slicing the bulk component (200) in a radial direction (R), perpendicular to the axial direction (A), to produce a plurality of soft magnetic thin laminates (260).

2. The method (600) according to claim 1, wherein the bulk slicing is via electrochemical machining.

3. The method (600) according to any of the preceding claims, wherein each of the plurality of soft magnetic thin laminates (260) has a thickness in the axial direction (A) of less than or equal to 0.5 mm.

4. The method (600) according to any of the preceding claims, wherein the bulk component (200) is a single-material bulk component (200).

5. The method (600) according to claim 4, wherein the single-material bulk component (200) is solidified in the axial direction (A) during investment casting.

6. The method (600) according to any of the preceding claims, wherein the bulk component (200) comprises a steel comprising from 3.0 to 7.0 weight percent silicon.

7. The method (600) according to any of claims 1-3 and 6, wherein the bulk component (200) is a multi-material bulk component (200).

8. The method (600) according to claim 1, wherein the soft magnetic material has an intrinsic coercivity of less than 1,000 Am-1.

9. The method (600) according to claim 8, wherein the soft magnetic material comprises an iron cobalt alloy, an iron silicon alloy, or a combination thereof.

10. The method (600) according to any of claims 7-9, wherein the multi-material bulk component (200) further comprises a non-magnetic alloy having a yield strength greater than or equal to 70 ksi at room temperature.

11. The method (600) according to claim 10, wherein the non-magnetic alloy comprises a nickel-based alloy or an iron-based alloy.

12. The method (600) according to any of claims 7-11, wherein the bulk component (200) is produced by additive manufacturing.

13. The method (600) according to any of the preceding claims, wherein the bulk component (200) comprises a plurality of flux barrier gaps (210) symmetrically distributed around a central axis (205) of the bulk component (200) and extending through the bulk component (200) in the axial direction (A).

14. The method (600) according to claim 12, wherein the bulk component (200) comprises a toroidal body (201) surrounding a hollow core (202) that extends in the axial direction (A), and wherein at least a first flux barrier gap (211) and a second flux barrier gap (212) are arranged in a V-shaped orientation.

15. The method (600) according to any of the preceding claims, further comprising heat treating the bulk component (200) prior to slicing the bulk component (200).
